# EUROPEAN PATENT SPECIFICATION

(11) **EP 1 633 084 B1**
(45) Date of publication and mention of the grant of the patent: **04.10.2017**
(21) Application number: 05017658.5
(22) Date of filing: 12.08.2005
(51) Int. Cl.: H04L 12/28

(54) **Method for selecting services provided by different network service providers**
Verfahren zum Auswählen von Diensten, die von verschiedenen Netzwerkdienstanbietern zur Verfügung gestellt werden
Procédé de sélection de services fournis par différents fournisseurs de services réseau

(30) Priority: 02.09.2004 CN 200410054237
(43) Date of publication of application: 08.03.2006
(73) Proprietor: ALCATEL LUCENT, 92100 Boulogne-Billancourt (FR)
(72) Inventor: YingLan, Jiang, Alcatel Shanghai Bell Co., Ltd., 201206 Shanghai (CN); FangXiang, Bin, Alcatel Shanghai Bell Co., Ltd., 201206 Shanghai (CN); KeYao, Zhu, Alcatel Shanghai Bell Co., Ltd., 201206 Shanghai (CN); RenXiang, Yan, Alcatel Shanghai Bell Co., Ltd., Shanghai 201206 (CN); Wei, Jiang, Alcatel Shanghai Bell Co., Ltd., 201206 Shanghai (CN)
(74) Representative: Wetzel, Emmanuelle

(56) References cited:
- WO-A-01/89142
- WO-A-03/067822
- US-A1- 2004 044 789
- MAMAKOS K LIDL J EVARTS UUNET TECHNOLOGIES L ET AL: "A Method for Transmitting PPP Over Ethernet (PPPoE)" IETF STANDARD, INTERNET ENGINEERING TASK FORCE, IETF, CH, February 1999 (1999-02), XP015008299 ISSN: 0000-0003
- JAYARAMAN NET COM R LOPEZ UNIV OF MURCIA Y OHBA (ED) TOSHIBA M PARTHASARATHY NOKIA A YEGIN SAMSUNG P: "PANA Framework" IETF STANDARD-WORKING-DRAFT, INTERNET ENGINEERING TASK FORCE, IETF, CH, vol. pana, no. 1, 16 July 2004 (2004-07-16), XP015024807 ISSN: 0000-0004 & FORSBERG NOKIA Y OHBA (ED) TOSHIBA B PATIL NOKIA H TSCHOFENIG SIEMENS A YEGIN SAMSUNG D: "Protocol for Carrying Authentication for Network Access (PANA)" IETF STANDARD-WORKING-DRAFT, INTERNET ENGINEERING TASK FORCE, IETF, CH, vol. pana, no. 4, 7 May 2004 (2004-05-07), XP015024819 ISSN: 0000-0004

## Description

### FIELD OF THE INVENTION

The present invention relates to the communication field, and more particularly, to a method of selecting services provided by different Network Service Providers (NSPs) in an access network.

### BACKGROUND OF THE INVENTION

In order to reduce the network cost and improve the network performance, broadband access equipment will undertake more and more functions which are originally provided by Broadband Remote Access Server (BRAS). One of such major functions is the termination of a Point-to-Point Protocol (PPP) session.

For the purpose of convenience, the broadband access equipment here refers to the Internet Protocol based Digital Subscriber Line Access Multiplexer (IP-DSLAM). Of course, those skilled in the art should appreciate that the broadband access equipment is not limited to the IP-DSLAM.

In the current broadband access network, a PPP session is usually terminated at BRAS. However, terminating a PPP session at IP-DSLAM boasts the following advantages. Firstly, IP-DSLAM is allowed to perform Layer 3 or IP Layer data forwarding, so that IP level Quality of Service (QoS) can be provided to a subscriber terminal. Secondly, only the IP-DSLAM's Media Access Control (MAC) address will be propagated in an Ethernet-based Metropolitan Area Network (E-MAN), while the MAC address of the subscriber terminal will not be propagated to an Ethernet switch in the MAN. This will significantly reduce the size of a Layer 2 address forwarding table in the Ethernet switches of the MAN. And thirdly, occupation of resources of Virtual Local Area Network (VLAN), for example, VLAN IDs (currently, there is only 4096 VLAN IDs) will be greatly decreased. Where a PPP session is terminated at IP-DSLAM, NSP can allocate one VLAN for each IP-DSLAM and Edge Router pair instead of allocating a unique VLAN for each subscriber terminal. In such a case, it is not necessary to support a VLAN stacking mechanism. This will significantly improve the network scalability.

However, where multiple NSPs simultaneously provide network services, terminating a PPP session at IP-DSLAM will be faced up with the problems as to: how to enable different subscriber terminals to select correctly services provided by different NSPs; and how the IP-DSLAM forwards data of different subscriber terminals to corresponding NSPs.

In such a case, there is therefore a need for a method of selecting services provided by different NSPs, so as to enable different subscriber terminals to select services provided by different NSPs and to forward data of different subscriber terminals to corresponding NSPs.

Further prior art is known from US 2004/044789 A1, WO 03/067822 A, L. Mamakos et al, UUNET Technologies: "A method for transmitting PPP Over Ethernet (PPPoE)" IETF Standard, Internet Engineering Task Force, IETF, CH, February 1999, XP015008299, and WO 01/89142 A.

### SUMMARY OF THE INVENTION

So far, there has not been a method of selecting services provided by different NSPs by broadband access based subscriber terminals.

The invention solves the described problems by a method according to claim 1.

Preferably, the broadband access equipment is a Digital Subscriber Line Access Multiplexer, also referred to as DSLAM.

Preferably, said step of setting up a session to determine an appropriate NSP includes the steps of: sending a discovery initialization message to said broadband access equipment by said subscriber terminal; after receiving said discovery initialization message, sending a discovery response message to said subscriber terminal by said broadband access equipment; after receiving said discovery response message, sending a discovery request message to said broadband access equipment by said subscriber terminal; and after receiving said discovery request message, sending a discovery session confirmation message to said subscriber terminal by said broadband access equipment.

Preferably, said discovery initialization message includes the name of a NSP, or parameters related to services which NSPs can provide. Preferably, said discovery response message includes one or more virtual server MAC addresses corresponding to NSPs.

Preferably, said discovery request message includes a virtual server MAC address corresponding to the NSP selected by said subscriber terminal, and said data packet sent by said subscriber terminal to said broadband access equipment contains the virtual server MAC address corresponding to the NSP selected by said subscriber terminal.

Preferably, said discovery session confirmation message includes a session ID which is generated by said broadband access equipment and is unique therein, and said data packet sent by said subscriber terminal to said broadband access equipment contains the session ID.

Preferably, the step of forwarding said data packet includes: selecting a virtual forwarding table (VFT) in said broadband access equipment according to the virtual server MAC address in said data packet; searching in the selected virtual forwarding table for a forwarding route according to the destination address of said data packet; extracting the IP packet encapsulated in the subscriber terminal's data packet; and forwarding said IP packet according to the found forwarding route.

Preferably, the step of forwarding said data packet includes: extracting the session ID contained in said data packet;

selecting a virtual forwarding table in said broadband access equipment according to said session ID; searching the selected virtual forwarding table for a forwarding route according to the destination address of said data packet; extracting the IP packet encapsulated in the subscriber terminal's data packet; and forwarding said IP packet according to the found forwarding route.

### BRIEF DESCRIPTION ON THE DRAWINGS

Here, the embodiments of the present invention are illustrated with reference to the accompanying drawings which form a part of the description, and the principle of the present invention is explained in conjunction with the explanatory portion thereof:
Fig. 1 shows a schematic diagram of network architecture according to the present invention;
Fig. 2 shows a schematic diagram of broadband access equipment used in the present invention;
Fig. 3 shows a schematic diagram of a NSP mapping table stored on storage means 23 of the broadband access equipment according to the present invention;
Fig. 4 shows a flow chart according to the present invention;
Fig. 5 shows a schematic diagram of a VFT; and Fig. 6 shows a schematic diagram of a mapping table between PPP session IDs and VFTs.

### DESCRIPTION OF THE PREFERRED EMBODIMENTS

Hereinafter, the preferred embodiments of the present invention will be described in detail with reference to the accompanying drawings.

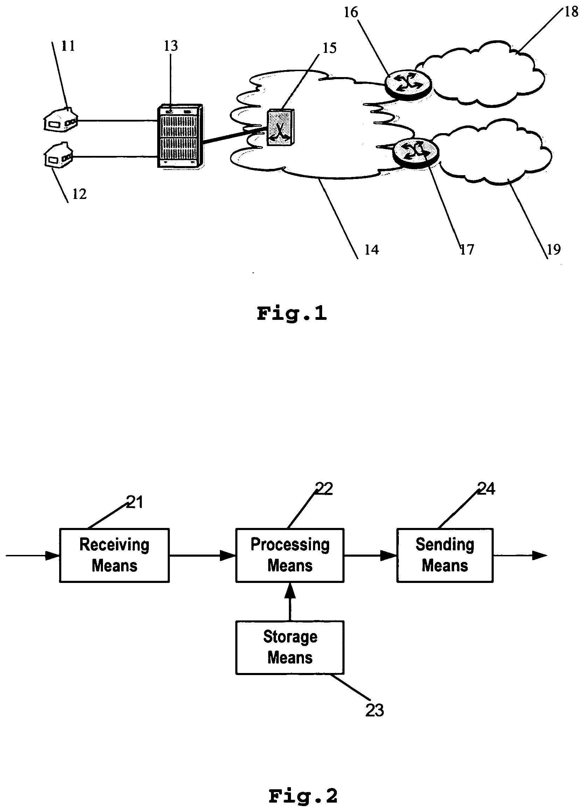

Fig. 1 shows a schematic diagram of network system architecture according to the present invention. As shown in Fig. 1, the network system comprises subscriber terminals 11 and 12, a broadband access equipment (IP-DSLAM) 13, an Ethernet based Metropolitan Area Network (E-MAN) 14, an Ethernet switch 15, Broadband Remote Access Servers/Edge Routers (BRASs/ERs) 16 and 17, and Network Service Providers (NSPs) 18 and 19. The subscriber terminals 11 and 12 are respectively connected via conventional lines to the IP-DSLAM 13, which is connected via the Ethernet switch 15 to the E-MAN 14. Besides, the E-MAN 14 is connected via the BRASs/ERs 16 and 17 to the NSPs 18 and 19. In other words, the IP-DSLAM 13 is connected via the E-MAN 14 to different NSPs 18 and 19.

Fig. 2 shows a schematic diagram of broadband access equipment used in the present invention. For the purpose of convenience, the broadband access equipment refers to the IP-DSLAM below. Of course, those skilled in the art should understand that the broadband access equipment is not limited to the IP-DSLAM. As shown in Fig. 2, the IP-DSLAM comprises: receiving means 21, for receiving data from subscriber terminals; processing means 22, for processing the data received by the receiving means 21; storage means 23, for storing information; and sending means 24, for sending the data processed by the processing means 22.

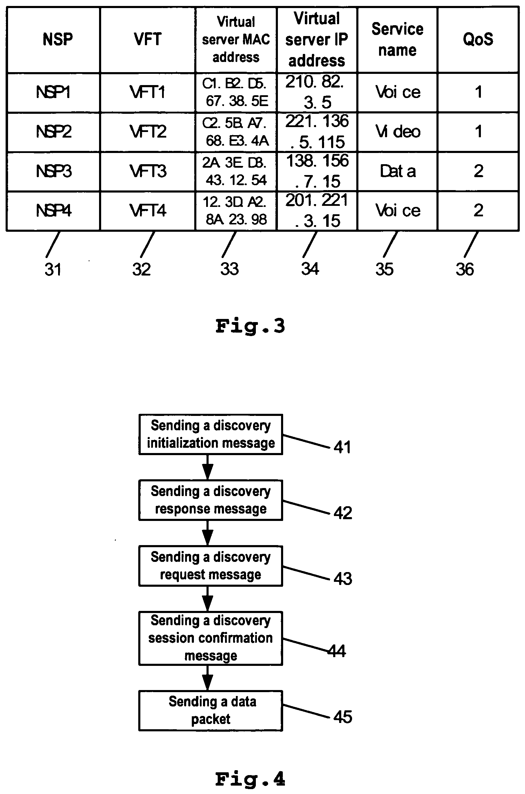

Fig. 3 shows a schematic diagram of a NSP mapping table stored on the storage means 23 of the IP-DSLAM according to the present invention. As shown in Fig. 3, the first column 31 is the name of NSP, in which there are stored names of the NSPs; the second column 32 is index of VFT, in which there are stored VFT's indices; the third column 33 is the MAC address of virtual PPP/PPPoE (PPP over Ethernet) server, in which there are stored MAC addresses; the fourth column 34 is the IP address of virtual PPP/PPPoE server, in which there are stored IP addresses; the fifth column 35 is service name, in which there are stored service names which can be provided by corresponding NSPs; and the sixth column 36 is QoS, in which there are stored QoSs which can be provided by corresponding NSPs. As shown in this figure, each NSP has a corresponding VFT and a virtual PPP/PPPoE server, each virtual PPP/PPPoE server having its own MAC address and IP address, and the service level or QoS the NSP can provide. Of course, those skilled in the art should understand that the table mentioned above is only as an example.

Fig. 4 shows a flow chart according to the present invention.

When a subscriber terminal wants to acquire network services from one NSP, it will start the process of setting up a PPP session. First, the flow goes to step 41, in which the subscriber terminal sends a Discovery Initialization message to the IP-DSLAM, the message contains the name of a NSP from where the subscriber terminal wants to acquire network services. After the receiving means 21 of the IP-DSLAM receives the message, it sends the message to the processing means 22. After receiving the message, the processing means 22 extracts the NSP name contained in the message, searches for the NSP mapping table on the storage means 23 according to the NSP name, finds out the virtual PPP/PPPoE server MAC address corresponding to the NSP name, extracts the MAC address from the table and sends the MAC address to the sending means 24.

Next, the flow goes to step 42, in which the sending means 24 sends a Discovery Response message to the subscriber terminal. The source MAC address contained in the message is the virtual PPP/PPPoE server MAC address corresponding to the NSP name found in step 41.

After the subscriber terminal receives the Discovery Response message, the flow goes to step 43. In step 43, the subscriber terminal sends a Discovery Request message to the IP-DSLAM. The destination MAC address contained in the message is the virtual PPP/PPPoE server MAC address acquired in step 42.

After the receiving means 21 of the IP-DSLAM receives the Discovery Request message, the flow goes to step 44. In step 44, the processing means 22 generates a PPP session ID. Afterwards, the sending means 24 sends a Discovery Session Confirmation message to the subscriber terminal. The Discovery Session Confirmation message contains the PPP session ID generated by the processing means 22. In general, the PPP session ID is unique in the IP-DSLAM.

In another embodiment according to the present invention, what is contained in the Discovery Initialization message sent by the subscriber terminal to the IP-DSLAM in step 41 is not the name of a NSP from where the subscriber terminal wants to acquire network services, but some other information, e.g. service names which the NSP can provide, or QoS and the like. In this case, after the receiving means 21 of the IP-DSLAM receives the Discovery Initialization message and sends it to the processing means 22, the processing means 22 extracts the service names or QoS and the like contained in the message, searches for the NSP mapping table on the storage means 23 according to these information, finds out the virtual PPPoE/PPP server MAC addresses of NSPs corresponding to these information, extracts the MAC addresses from the table and sends them to the sending means 24. Here, there might be a plurality of NSPs corresponding to these information, thereby a plurality of virtual PPPoE/PPP server MAC addresses are obtained. The processing means 22 extracts all the matched virtual PPPoE/PPP server MAC addresses from the NSP mapping table and sends them to the sending means 24.

Then, the sending means 24 sends a plurality of Discovery Response messages to the subscriber terminal in step 42. The source MAC address contained in each of the messages is one of the virtual PPPoE/PPP server MAC addresses of the plurality of NSPs corresponding to the service names or QoS and the like.

After the subscriber terminal receives the plurality of Discovery Response messages, the flow goes to step 43. In step 43, the subscriber terminal selects the optimum NSP from NSPs corresponding to the plurality of Discovery Response messages, acquires from one of the Discovery Response messages the virtual PPPoE/PPP server MAC address corresponding to the selected NSP, and then sends a Discovery Request message to the IP-DSLAM. The destination MAC address contained in the Discovery Request message is the virtual PPPoE/PPP server MAC address corresponding to the above-mentioned selected NSP.

Similarly, after the receiving means 21 of the IP-DSLAM receives the Discovery Request message, the flow goes to step 44. In step 44, the processing means 22 generates a PPP session ID. Afterwards, the sending means 24 sends a Discovery Session Confirmation message to the subscriber terminal. The Discovery Session Confirmation message contains the PPP session ID generated by the processing means 22. In general, the PPP session ID is unique in the IP-DSLAM.

Through the above-described four steps, the PPP session is set up between the subscriber terminal and the IP-DSLAM, and standard PPP configuration steps and data sending can be performed between them. It should be note that the aforesaid PPP session ID keeps unchanged at long while performing standard PPP configuration steps and data sending.

After the PPP session is set up between the subscriber terminal and the IP-DSLAM, the flow goes to step 45. In step 45, the subscriber terminal starts to send a data packet to the IP-DSLAM.

In one embodiment of the present invention, upon receipt of the data packet, the receiving means 21 of the IP-DSLAM sends the data packet to the processing means 22. Then, the processing means 22 extracts the destination MAC address contained in the data packet. Next, the processing means 22 searches for the Virtual Forwarding Table (VFT) index corresponding to the destination MAC address in the NSP mapping table on the storage means 23 according to the destination MAC address. For instance, as shown in Fig. 3, when the destination MAC address is C1. B2. D5. 67. 38. 5E, the VFT corresponding to index 1 is selected; if the destination MAC address is C2. 5B. A7. 68. E3. 4A, the VFT corresponding to index 2 is selected, and the rest can be reasoned out by analogy.

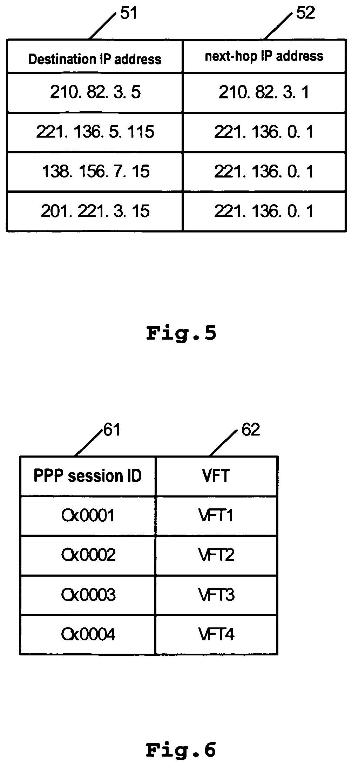

Fig. 5 shows a schematic diagram of a VFT which is stored on the storage means 23. In the VFT, the first column 51 is destination IP address, and the second column 52 is IP address of the next-hop router. When the destination IP address is 210.82.3.5, the IP-DSLAM forwards the data packet of the subscriber terminal to the next-hop router whose IP address is 210.82.3.1. When the destination IP address is 221.136.5.115, the IP-DSLAM forwards the data packet of the subscriber terminal to the next-hop router whose IP address is 221.136.0.1. And the rest can be reasoned out by analogy.

After the processing means 22 finds the matched VFT, it extracts the IP packet encapsulated in the subscriber terminal's data packet. Then, the processing means 22 selects the next-hop router according to the selected matched VFT and the destination IP address of the IP packet, and sends the data packet to the sending means 24. Afterwards, the sending means 24 sends the data packet to the selected next-hop router, and thus finally sends it to a correct NSP network.

According to its own routing table and the destination IP address contained in the data packet, the next-hop router searches for a new route and forwards the data packet to a matched router until the data packet of the subscriber terminal arrives at the destination.

In another embodiment according to the present invention, while the processing means 22 generates a PPP session ID in step 44, it also generates a mapping table between the PPP session ID and the VFT and stores the table on the storage means 23.

Fig. 6 shows a schematic diagram of a mapping table between PPP session IDs and VFTs, in which the first column 61 is PPP session ID and the second column 62 is VFT index.

In another embodiment according to the present invention, upon receipt of the data packet, the receiving means 21 of the IP-DSLAM sends the data packet to the processing means 22. Then, the processing means 22 extracts the PPP session ID contained in the data packet. Next, the processing means 22 searches for the Virtual Forwarding Table (VFT) index corresponding to the PPP session ID in the mapping table between PPP session IDs and VFTs on the storage means 23 according to the PPP session ID.

As shown in Fig. 6, if the PPP session ID is 0x0001, the VFT corresponding to index 1 is selected. If the PPP session ID is 0x0002, the VFT corresponding to index 2 is selected. The rest can be reasoned out by analogy.

After the processing means 22 finds the matched VFT, it extracts the IP packet encapsulated in the subscriber terminal's data packet. Then, the processing means 22 selects the next-hop router according to the selected matched VFT and the destination IP address of the IP packet, and sends the data packet to the sending means 24. Afterwards, the sending means 24 sends the data packet to the selected next-hop router, and thus finally sends it to a correct NSP network.

Since a PPP session ID is valid during communication only and the corresponding PPP session ID becomes invalid once the communication is terminated, the mapping table between PPP session IDs and VFTs on the storage means 23 should be dynamically updated.

By the above-described embodiments, it is achieved that a subscriber terminal selects services provided by different NSPs and the IP-DSLAM forwards data of the subscriber terminal to the corresponding NSP.

Of course, those of ordinary skilled in the art should appreciate that the above description is merely illustrative. Various changes and alternations can be made without departing from the concept and scope of the present invention. It should be understood that the present invention is not limited to the specific embodiments, and the scope thereof is defined by the claims as appended.

## Claims

1. A method of selecting services provided by different Network Service Providers, NSPs, (18, 19) in an access network,
said access network comprising a subscriber terminal (11, 12), a Broadband Remote Access Server or Edge Router (16, 17) and a broadband access equipment (13),
whereby said broadband access equipment (13) is positioned in the access network between the subscriber terminal (11, 12) and the Broadband Remote Access Server or Edge Router (16, 17),
wherein said method includes the steps of:
- setting up a Point-to-Point Protocol, PPP, or Point-to-Point Protocol over Ethernet, PPPoE, session between said subscriber terminal (11, 12) and said broadband access equipment (13) to determine an appropriate NSP (18, 19), the PPP or PPPoE session being terminated at the broadband access equipment (13) ;
- sending (45) a data packet to said broadband access equipment (13) by said subscriber terminal (11, 12), wherein communication between said subscriber terminal (11, 12) and said broadband access equipment (13) is based on PPP or PPPoE;
- after receiving said data packet: selecting a virtual forwarding table corresponding to said determined NSP (18, 19), extracting an Internet Protocol packet, also referred to as IP packet, encapsulated in the subscriber terminal's data packet, searching in the selected virtual forwarding table for a forwarding route according to the destination IP address of said IP packet, and forwarding said IP packet according to the found forwarding route by said broadband access equipment (13) .

2. The method as claimed in claim 1, wherein the broadband access equipment is a Digital Subscriber Line Access Multiplexer, also referred to as DSLAM.

3. The method as claimed in claim 1 or claim 2, wherein said step of setting up a session to determine an appropriate NSP includes the steps of:
- sending (41) a discovery initialization message to said broadband access equipment by said subscriber terminal;
- after receiving said discovery initialization message, sending (42) a discovery response message to said subscriber terminal by said broadband access equipment;
- after receiving said discovery response message, sending (43) a discovery request message to said broadband access equipment by said subscriber terminal; and
- after receiving said discovery request message, sending (44) a discovery session confirmation message to said subscriber terminal by said broadband access equipment.

4. The method as claimed in claim 3, wherein said discovery initialization message includes the name of a NSP, or parameters related to services which NSPs can provide.

5. The method as claimed in claim 3 or claim 4, wherein said discovery response message includes one or more virtual server MAC addresses (33) corresponding to NSPs.

6. The method as claimed in any one of claims 3 to 5, wherein said discovery request message includes a virtual server MAC address corresponding to the NSP selected by said subscriber terminal, and said data packet sent by said subscriber terminal to said broadband access equipment contains the virtual server MAC address corresponding to the NSP selected by said subscriber terminal.

7. The method as claimed in any one of claims 3 to 6, wherein said discovery session confirmation message includes a session ID (61) which is generated by said broadband access equipment and is unique therein, and said data packet sent by said subscriber terminal to said broadband access equipment contains the session ID.

8. The method as claimed in claim 6, wherein the virtual forwarding table in said broadband access equipment is selected according to the virtual server MAC address in said data packet.

9. The method as claimed in claim 7, wherein the step of forwarding said data packet includes:
- extracting the session ID contained in said data packet;
- selecting a virtual forwarding table in said broadband access equipment according to said session ID.

## Patentansprüche

1. Verfahren zum Auswählen von Diensten, die von verschiedenen Netzwerkdienstanbietern, NSPs, (18, 19) in einem Zugangsnetzwerk bereitgestellt werden,
wobei besagtes Zugangsnetzwerk ein Teilnehmerendgerät (11, 12), einen entfernten Breitband-Zuga ngsserver oder Edge Router (16, 17) und ein Breitband-Zugangsgerät (13) umfasst,
wobei besagtes Breitband-Zugangsgerät (13) im Zugangsnetzwerk zwischen dem Teilnehmerendgerät (11, 12) und dem entfernten Breitband-Zugangsserver oder Edge Router (16, 17) positioniert ist,
wobei besagtes Verfahren die folgenden Schritte beinhaltet:
- Aufbauen einer Punkt-zu-Punkt-Protokoll-, PPP, oder Punkt-zu-Punkt-Protokoll-über-Ethernet, PPPoE, -Sitzung zwischen besagtem Teilnehmerendgerät (11, 12) und besagtem Breitband-Zugangsgerät (13) zum Bestimmen eines geeigneten NSP (18, 19), wobei die PPP- oder PPPoE-Sitzung am Breitband-Zugangsgerät (13) endet;
- Senden (45) eines Datenpakets an besagtes Breitband-Zugangsgerät (13) durch besagtes Teilnehmerendgerät (11, 12), wobei die Kommunikation zwischen besagtem Teilnehmerendgerät (11, 12) und besagtem Breitband-Zugangsgerät (13) auf der auf der Basis von PPP oder PPPoE erfolgt;
- nach dem Empfangen des besagten Datenpakets: Auswählen einer virtuellen Forwarding-Tabelle entsprechend dem bestimmten NSP (18, 19), Extrahieren eines Internet-Protokoll-Pakets, auch bezeichnet als IP-Paket, verkapselt im Datenpaket des Teilnehmerendgeräts, Suchen in der ausgewählten virtuellen Forwarding-Tabelle nach einer Forwarding-Route gemäß der Ziel-IP-Adresse des besagten IP-Pakets, und das Weiterleiten des besagten IP-Pakets gemäß der gefundenen Forwarding-Route durch besagtes Breitband-Zugangsgerät (13).

2. Verfahren nach Anspruch 1, wobei das Breitband-Zugangsgerät ein Digitaler Teilnehmeranschluss-Zugangsmultiplexer, auch als DSLAM bezeichnet, ist.

3. Verfahren nach Anspruch 1 oder Anspruch 2, wobei besagter Schritt des Aufbauens einer Sitzung zum Bestimmen eines geeigneten NSP die folgenden Schritte beinhaltet:
- Senden (41) einer Entdeckungsinitialisierungsnachricht an besagtes Breitband-Zugangsgerät durch besagtes Teilnehmerendgerät;
- nach dem Empfangen besagter Entdeckungsinitialisierungsnachricht das Senden (42) einer Entdeckungsantwortnachricht an besagtes Breitband-Zugangsgerät durch besagtes Teilnehmerendgerät;
- nach dem Empfangen besagter Entdeckungsantwartnachricht das Senden (43) einer Entdeckungsanforderungsnachricht an besagtes Breitband-Zugangsgerät durch besagtes Teilnehmerendgerät; und
- nach dem Empfangen besagter Entdeckungsanforderungsnachricht das Senden (44) einer Entdeckungssitzungs-Bestätigungsnachricht an besagtes Breitband-Zugangsgerät durch besagtes Teilnehmerendgerät.

4. Verfahren nach Anspruch 3, wobei besagte Entdeckungsinitialisierungsnachricht den Namen eines NSP oder Parameter bezogen auf die Dienste, die NSPs bereitstellen können, beinhaltet.

5. Verfahren nach Anspruch 3 oder Anspruch 4, wobei besagte Entdeckungsantwortnachricht eine oder mehrere virtuelle Server-MAC-Adressen (33) beinhaltet, die NSPs entsprechen.

6. Verfahren nach einem der Ansprüche 3 bis 5, wobei besagte Entdeckungsanforderungsnachricht eine virtuelle Server-MAC-Adresse beinhaltet, die dem von besagtem Teilnehmerendgerät ausgewählten NSP entspricht, und wobei besagtes Datenpaket, das vom Teilnehmerendgerät an besagtes Breitband-Zugangsgerät gesendet wurde, die virtuelle Server-MAC-Adresse beinhaltet, die dem von besagtem Teilnehmerendgerät ausgewählten NSP entspricht.

7. Verfahren nach einem der Ansprüche 3 bis 6, wobei besagte Entdeckungssitzungs-Bestätigungsnachricht eine Sitzungs-ID (61) beinhaltet, welche durch besagtes Breitband-Zugangsgerät generiert wurde und darin einzigartig ist, und wobei besagtes Datenpaket, das vom Teilnehmerendgerät an besagtes Breitband-Zugangsgerät gesendet wurde, die Sitzungs-ID enthält.

8. Verfahren nach Anspruch 6, wobei die virtuelle Forwarding-Tabelle in besagtem Breitband-Zugangsgerät ausgewählt wird gemäß der virtuellen Server-MAC-Adresse in besagtem Datenpaket.

9. Verfahren nach Anspruch 7, wobei der Schritt des Weiterleitens von besagtem Datenpaket beinhaltet:
- Extrahieren der in besagtem Datenpaket enthaltenen Sitzungs-ID;
- Auswählen einer virtuellen Forwarding-Tabelle in besagtem Breitband-Zugangsgerät gemäß besagter Sitzungs-ID.

## Revendications

1. Procédé de sélection de services fournis par des Fournisseurs de services de réseau, NSP, différents (18, 19) dans un réseau d'accès,
ledit réseau d'accès comprenant un terminal d'abonné (11, 12) et un Serveur d'accès à distance à large bande ou un Routeur de bordure (16, 17) et un équipement d'accès à large bande (13),
dans lequel ledit équipement d'accès à large bande (13) est positionné dans le réseau d'accès entre le terminal d'abonné (11, 12) et le Serveur d'accès à distance à large bande ou le Routeur de bordure (16, 17),
ledit procédé incluant les étapes suivantes :
- établir une session de Protocole point à point, PPP, ou de Protocole point à point sur Ethernet, PPPoE, entre ledit terminal d'abonné (11, 12) et ledit équipement d'accès à large bande (13) pour déterminer un NSP approprié (18, 19), la session PPP ou PPPoE étant terminée au niveau de l'équipement d'accès à large bande (13) ;
- envoyer (45) un paquet de données audit équipement d'accès à large bande (13) par ledit terminal d'abonné (11, 12), la communication entre ledit terminal d'abonné (11, 12) et ledit équipement d'accès à large bande (13) étant basée sur PPP ou PPPoE ;
- après la réception dudit paquet de données : sélectionner une table de transfert virtuel correspondant audit NSP déterminé (18, 19), extraire un paquet de Protocole Internet, également appelé paquet IP, encapsulé dans le paquet de données du terminal d'abonné, rechercher dans la table de transfert virtuel sélectionnée une route de transfert en fonction de l'adresse IP de destination dudit paquet IP, et transférer ledit paquet IP en fonction de la route de transfert trouvée par ledit équipement d'accès à large bande (13).

2. Procédé selon la revendication 1, dans lequel l'équipement d'accès à large bande est un Multiplexeur d'accès de ligne d'abonné numérique, également appelé DSLAM.

3. Procédé selon la revendication 1 ou la revendication 2, dans lequel ladite étape d'établissement d'une session pour déterminer un NSP approprié inclut les étapes suivantes :
- envoyer (41) un message d'initialisation de découverte audit équipement d'accès à large bande par ledit terminal d'abonné ;
- après la réception dudit message d'initialisation de découverte, envoyer (42) un message de réponse de découverte audit terminal d'abonné par ledit équipement d'accès à large bande ;
- après la réception dudit message de réponse de découverte, envoyer (43) un message de demande de découverte audit équipement d'accès à large bande par ledit terminal d'abonné ; et
- après la réception dudit message de demande de découverte, envoyer (44) un message de confirmation de session de découverte audit terminal d'abonné par ledit équipement d'accès à large bande.

4. Procédé selon la revendication 3, dans lequel ledit message d'initialisation de découverte inclut le nom d'un NSP, ou des paramètres liés à des services que des NSP peuvent fournir.

5. Procédé selon la revendication 3 ou la revendication 4, dans lequel ledit message de réponse de découverte inclut une ou plusieurs adresses MAC de serveur virtuel (33) correspondant à des NSP.

6. Procédé selon l'une quelconque des revendications 3 à 5, dans lequel ledit message de demande de découverte inclut une adresse MAC de serveur virtuel correspondant au NSP sélectionné par ledit terminal d'abonné, et ledit paquet de données envoyé par ledit terminal d'abonné audit équipement d'accès à large bande contient l'adresse MAC de serveur virtuel correspondant au NSP sélectionné par ledit terminal d'abonné.

7. Procédé selon l'une quelconque des revendications 3 à 6, dans lequel ledit message de confirmation de session de découverte inclut un ID de session (61) qui est généré par ledit équipement d'accès à large bande et qui est unique audit message, et ledit paquet de données envoyé par ledit terminal d'abonné audit équipement d'accès à large bande contient l'ID de session.

8. Procédé selon la revendication 6, dans lequel la table de transfert virtuel dans ledit équipement d'accès à large bande est sélectionnée en fonction de l'adresse MAC de serveur virtuel dans ledit paquet de données.

9. Procédé selon la revendication 7, dans lequel l'étape de transfert dudit paquet de données inclut les étapes suivantes :
- extraire l'ID de session contenu dans ledit paquet de adonnées ;
- sélectionner une table de transfert virtuel dans ledit équipement d'accès à large bande en fonction dudit ID de session.
